# EUROPEAN PATENT SPECIFICATION

(11) **EP 1 347 104 B1**
(45) Date of publication and mention of the grant of the patent: **26.10.2005**
(21) Application number: 03003988.7
(22) Date of filing: 24.02.2003
(51) Int. Cl.: E03B 7/10, F16K 24/02

(54) **Water discharge valve**
Wasserauslassventil
Soupape d'évacuation

(30) Priority: 22.03.2002 SE 0200913
(43) Date of publication of application: 24.09.2003
(73) Proprietor: Mora Armatur Holding AB, 79227 Mora (SE)
(72) Inventor: Jungvig, Sven-Erik, 79297 Mora (SE)
(74) Representative: Norén, Per Bo Arne

(56) References cited:
- BE-A- 526 349
- US-A- 4 209 033
- US-A- 5 752 542

## Description

### Technical Field

The present invention relates to a water discharge valve intended to be mounted extending through an external wall element and with control means and outlet located by the outside of the wall.

The invention relates in particular to a water discharge valve of the above stated type, which facilitates that the water discharge valve is completely drained when closed, even if a hose is connected to the outlet member, and which also prevents a return flow back into the supply pipe of the water discharge valve in case that a pressure drop should occur.

### Background Art

Water discharge valves of the above type are previously known, e.g. from SE, B, 393 845; SE, B, 403 182 and SE, B, 455 434. All these known types are intended to be connected to a supply pipe adjacent to the inside surface of an external wall, and include a control means and outlet by the outside surface of the wall. It is also desirable that such a water discharge valve in closed position is substantially completely drained of water existing outside the valve member of the water discharge valve, and that same in open position due to a pressure drop in the supply pipe does not allow a return flow, e.g. from a hose connected to the outlet of the water discharge valve.

The solutions shown in SE, B, 393 845 and SE, B, 403 182 are in order to accomplish the above features equipped with a vacuum valve adjacent to the outlet, which facilitates a supply of air to the outer internal part of the water discharge valve when the water discharge valve is closed, thereby draining the water discharge valve even if a hose is connected. In order to prevent a return flow, if water pressure in the supply pipe ceases or is heavily reduced while the water discharge valve is in use, it is suggested to arrange the valve member spring loaded against the valve seat, which, in combination with the aforementioned vacuum valve, is suggested to prevent a return flow of water into the pipe system of the building.

An alternative solution for accomplishing drainage of existing water in the water discharge valve is disclosed in SE, B, 455 434, according to which an additional turning operation of the control means, after establishment of contact between the valve member and the valve seat, results in an opening operation of a valve means located adjacent to the outer end portion of the water discharge valve, whereby existing water in the water discharge valve can exit through a drainage opening located at the side of the ordinary outlet member.

Another proposed solution relating to the problem of evacuating water from a water discharge valve and for accomplishing automatic drainage (at least partially) of a hose connected to a water discharge valve is disclosed in SE, B, 457 377. This solution is based on locating a valve means with an air channel as an intermediate member between the outlet of a water discharge valve and a hose, i.e. with the hose connected to the valve means. When the water discharge valve is in an open condition, the air channel is closed by the water pressure acting on an elastic valve member in the valve means, and when the water discharge valve is in a closed condition, the air channel is opened due to the lack of water pressure.

US-A-5 752 542 discloses a water discharge valve to be mounted through a wall comprising a longitudinal surrounding valve housing arranged with a connecting member at a first end portion and an outlet member by the second end portion, arranged when influenced via a longitudinally extending tubular shaft, surrounded by the valve housing, accomplish movement of a valve member towards/from a valve seat located adjacent to the first end portion of the valve housing, and comprising a tubular shaft communicating with an external surrounding atmosphere via at least one channel in connection with an outer region adjacent to the second end portion of the valve housing, a valve means being arranged to close the opposite end of the tubular shaft by pressure influence from water flowing through the valve housing to the outlet member, the valve means being arranged to open communication from the internal part of the tubular shaft to the valve housing when said pressure influence is lost.

### Disclosure of Invention

The object of the present invention is to disclose a water discharge valve, which, without additional external valve means, meets all desired features relating to complete drainage of a water disharge valve in connection with a closing operation, even if a hose should be connected to the outlet member of the water discharge valve.

Another object is to disclose a water discharge valve which prevents a return flow of water into a supply pipe in case of a pressure drop, as well as to disclose a water discharge valve in which all included valve elements are located immediately adjacent to the inside of an external wall, i.e. having a non-freezing location.

A further not irrelevant object is to accomplish the above functions in a simple and cost effective way, without any additional external valve means.

The above objects are accomplished by a water discharge valve according to claim 1 and related subclaims.

### Brief Description of Drawings

A non-restricting example of an embodiment of a water discharge valve according to the present invention will be more fully described below with reference to the accompanying drawings, in which:-
Fig. 1 shows a schematical view in longitudinal section of an example of a water discharge valve according to the present invention, showing the water discharge valve in open position;
Fig. 2 shows a schematical view corresponding to Fig. 1, but with the water discharge valve in closed position, and also illustrating how the water discharge valve is drained of water when closed;
Fig. 3 shows a schematical view corresponding to Fig. 2, intended to illustrate how the protection against a return flow operates when a pressure drop occurs in a supply pipe;
Fig. 4 shows an enlarged view in longitudinal section of the part of the water discharge valve where valve cone/valve seat and associated means are arranged, showing said means in the open position as illustrated in Fig. 1;
Fig. 5 is a view corresponding to Fig. 4, showing said means in the closed position as illustrated in Fig. 2; and
Fig. 6 is a view corresponding to Fig. 4, showing said means in the position taken up when pressure is not maintained from the water supplying pipe system.

### Description of a Preferred Embodiment

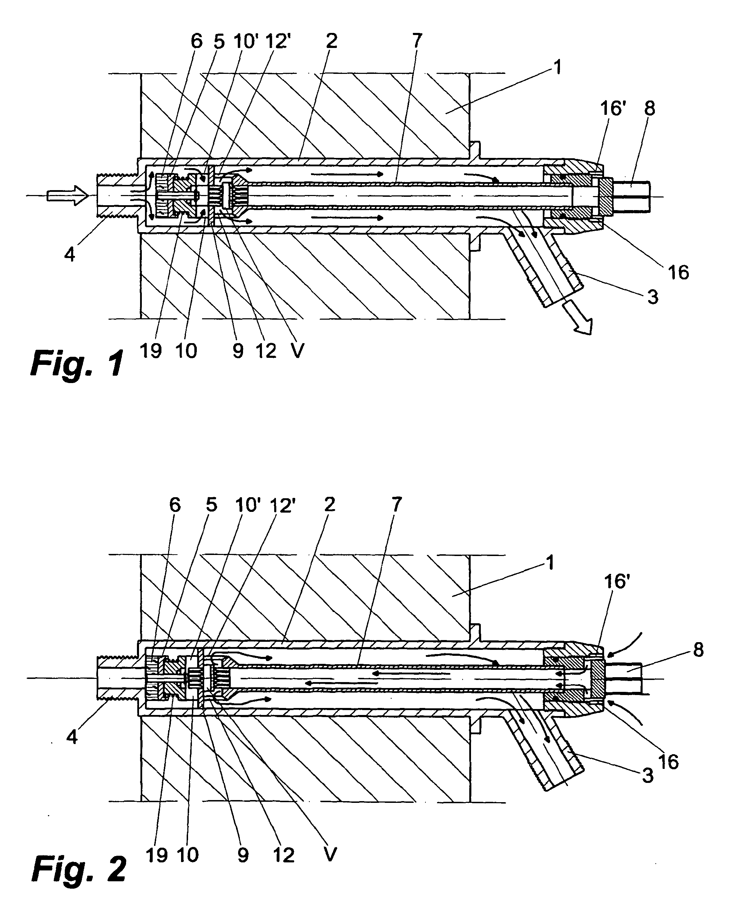

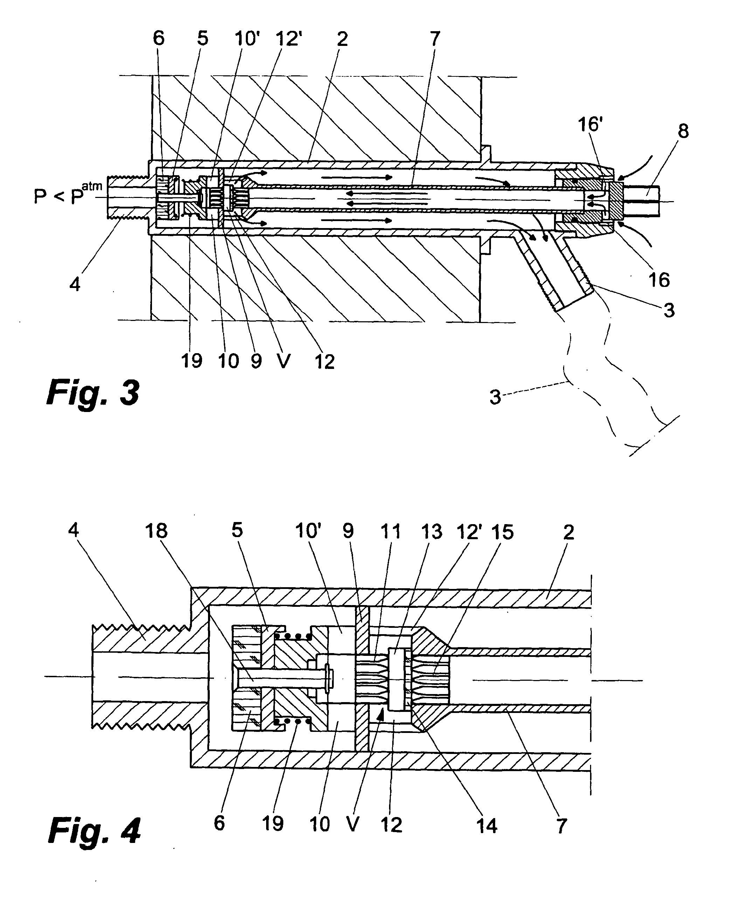

Figs. 1 - 3 show schematically an example of a water discharge valve according to the present invention, which is only intended to serve as an example of an embodiment within the scope of the inventive thought, and also to simplify understanding of the following description. Furthermore, Figs. 4 - 6 show in enlarged scale the components included in the region of the water discharge valve where valve member valve seat are arranged, showing the internally relative positions of these components for the various cases of application illustrated in Figs. 1 - 3.

In the embodiment shown, 1 designates an external wall, wherethrough a longitudinally extending valve housing 2 extends. The valve housing 2 is arranged with an outlet member 3 adjacent to an outer end portion, and at the opposed end portion arranged with a threaded connecting member 4, to which a supply pipe (not shown) is intended to be connected. A valve member 5 with associated gasket 6 are located adjacent to the end portion of the valve housing 2 where the connecting member 4 is arranged, and a longitudinally extending tubular shaft 7 is centrally located within the valve housing 2, arranged to perform an axially extending movement when a control means 8 is manually influenced, said means shown as a member having square cross-section and extending from the outer portion of the water discharge valve.

A rotary movement of the control means 8 in a first direction is arranged to move the valve member 5 with associated gasket 6 away from a bottom portion of the valve housing 2, which serves as a valve seat, whereby water is supplied to the outlet member 3. A rotary movement in a second and opposed direction moves the valve member 5 in opposite direction and reduces initially the discharged flow, and when contact is established with the valve seat, the water flow is interrupted.

The above described function is generally known for water discharge valves, and locating the valve member valve seat adjacent to the portion of the water discharge valve which is close to the inside of a wall element is desirable, e.g. to minimize the risk for damage by freezing.

When the water discharge valve according to the present invention takes up an open position, as shown in Fig. 1, supplied water flows as indicated by arrows past the gasket/valve member 6, 5 to a dividing member 9, where the water through channels 10, 10' passes via grooves taken up in a first piston shaped member 11 extending through the dividing member 9. From a space surrounding the first piston shaped member 11, the water flows via channels 12, 12' to a space in the valve housing 2 surrounding the tubular shaft 7, and it is discharged from the water discharge valve through the outlet member 4.

As shown in Fig. 4, the first piston shaped member 11 is transformed into a disc shaped valve member 13 having an associated gasket 14, which are located in an intermediate position to a second piston shaped member 15 having longitudinally extending grooves, extending into the tubular shaft 7. Said first piston shaped member 11 and second piston shaped member 15, and intermediately located disc shaped valve member 13 with the gasket 14, constitutes in association with coacting members a valve means, as a complete unit denominated V in Fig. 1 - 3.

When water flows through the water discharge valve, the disc shaped valve member 13 with associated gasket 14 are pressed by the water pressure to a position in which the end portion of the tubular shaft 7 directed towards the connecting member 4 is closed. Throughflowing water can thus not penetrate into the tubular shaft 7. This is shown more in detail in Fig. 4.

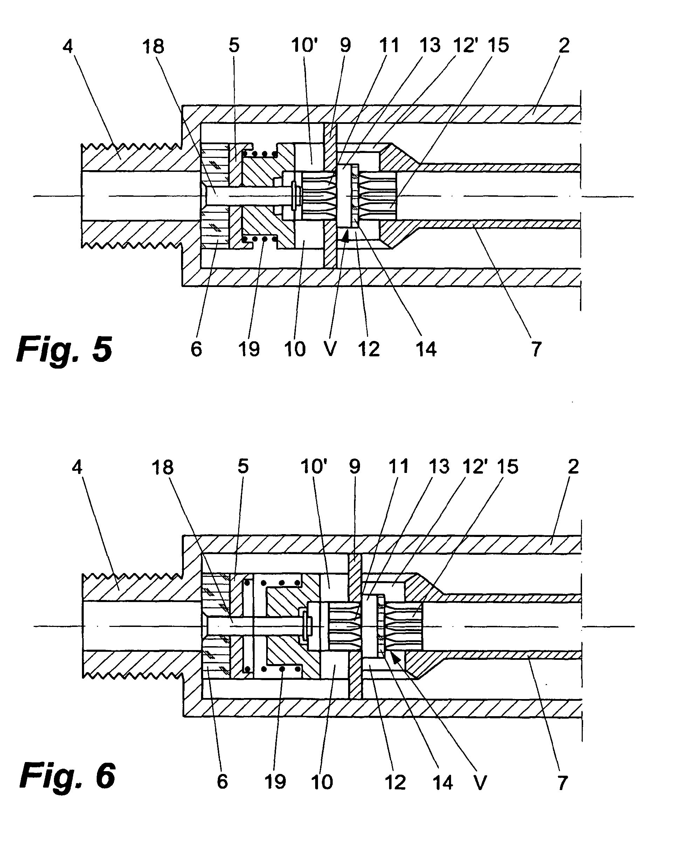

During a closing operation (Fig. 2), the following occurs. When the water supply is interrupted due to the valve member 5 with associated gasket 6 by manual influence applied to the control member 8 being moved to a contact position against the valve seat formed by an end portion of the valve housing 2, the disc shaped valve member 13 being moved to a contact position against the dividing member 9, and thereby are also the first piston shaped member 11 and the second piston shaped member 15 moved, which constitute units integrated with the disc shaped valve member 13. As a result of this movement, the external grooves of the second disc shaped member 15 will open up communication between the internal part of the tubular shaft 7 via channels 12,12' to the space within the valve housing 2 surrounding the tubular shaft 7, and thus also to the outlet member 3. As shown by the outer portion of the water discharge valve, there are channels 16,16' formed arranged to create communication between the internal part of the tubular shaft 7 and surrounding external atmosphere, which means that air via said channels 16, 16' will flow through the discharge valve as indicated by arrows in Fig. 2, whereby same is drained of water. Such a draining operation will also take place in at least a first part of a possibly to the outlet member 3 connected hose. The positions of included components when a closing operation has been completed are shown more in detail in Fig. 5.

In case that a pressure loss should occur in the pipe system whereto the water discharge valve is connected, it is important that a return flow can not occur to the pipe system in the building from e.g. a hose connected to the outlet member 3. Such a situation is illustrated in Figs. 3 and 6 resoectively.

Fig. 3 thus shows the water discharge valve in an open position, and with the incoming pressure P at the connecting member 4 being less than atmosperic pressure (P < P^{atm}). A hose 17 is indicated in Fig. 3 with broken lines, connected to the outlet member 3. In such a situation, existing water in the hose 17 may flow back through the water discharge valve and via the connecting member 4 back into the pipe system of the building, unless the water discharge valve has been arranged with a suitable protective device, which can prevent such a return flow.

As best seen from Fig. 6, in such a situation will the valve member gasket 5 and 6 respectively, which are mounted on a movable shaft 18, by influence from a pressure acting helical spring 19 be moved forward into contact with the valve seat created in the valve housing 2, and thereby close the communication between the water discharge valve and the water supplying pipe system connected to the connecting member 4. Simultaneously is also the valve means V, formed by the piston shaped members 11, 15 and intermediately located disc shaped valve member 13 with associated gasket 14, moved from the position illustrated in Fig. 4 to the position shown in Fig. 6, i.e. the valve member 13 takes up contact against the dividing member 9 (thereby creating a second non-return valve in excess of previously mentioned spring influenced non-return valve function), and simultaneously opens the second piston shaped member 15 flow communication with the internal part of the tubular shaft 7. As illustrated by arrows in Fig. 3, this means that air can flow in through the channels 16,16' to the internal part of the tubular shaft 7, and past the piston member 15 and via the channels 12, 12' out into the valve housing 2. Said air continues through the outlet member 3 into the hose 17, which thereby also is drained of water, at least with regard to the first part connected to the outlet member.

As disclosed in the above description, communication with connected supplying pipe network will be interrupted at two different points in the water discharge valve, by the valve member 5 with associated gasket 6 close to the connecting member 4, but also by the valve means V due to the contact of the disc shaped valve member 13 against the dividing member 9 (in combination with the position of the first piston shaped member 11 in relation to the dividing member 9). Accordingly, "double safety" is achieved against return flow into the pipe network of the building.

The second piston shaped member 15 of the valve means V accomplishes simultaneously that substantially the entire valve housing 2 receives communication with surrounding atmosphere at the outside of the external wall 1, and facilitates thus drainage of the valve housing 2 as well as a possibly to the outlet member 3 connected hose 17.

Important features of the present invention are thus use of the tubular shaft 7 for obtaining communication between surrounding atmosphere and the valve housing 2, as well as use of a valve means V, which during use of the water discharge valve prevents supplied water from flowing through said tubular shaft 7, but which at a pressure loss opens up for a supply of air from surrounding atmosphere via the tubular shaft 7 into the valve housing 2.

It should be emphasized, that the above features obviously can be achieved with use of other types of valve means V than shown and described. Accordingly, shown valve means may e.g. be implemented as a spherical ball shaped member with associated valve seat, but also other solutions can be envisaged by those skilled in the art. Gaskets may be arranged in other locations than shown, e.g. by both sides of the disc shaped valve member 13, and spring means may also be arranged to obtain improved security for a movement of the valve means V to the position shown in Figs. 3 and 6. Many modifications are obviously also possible with regard to the arrangement of the channels 16, 16' while still maintaining desired function, i.e. communication between the internal part of the tubular shaft 7 and outside surrounding atmosphere. For example, only one such channel may be used, which may comprise of a centrally located hole extending from and through the shown control member 8 to a point where communication is established with the internal part of the tubular shaft 7. Such a hole may e.g. be created by a simple drilling operation.

### Industrial Applicability

The water discharge valve according to the present invention offers substantial functional advantages since same is drained of water in closed position, as well as when a pressure loss occurs in supplying pipe network, without requiring use of an external vacuum valve or similar. Furthermore, when such a pressure loss occurs, return flow into the pipe network of the building is prevented at two from each other separated points within the water discharge valve. Use of the tubular shaft 7 as an inlet channel for air from outside surrounding atmosphere results in that included valve functions can be concentrated at a common region of the water discharge valve, adjacent to the inside of a wall 1 through which the water discharge valve extends, a region which normally is free of frost, in difference to known solutions having vacuum valves or similar located by the outside surface of an external wall.

A further not unimportant advantage is also that the water discharge valve according to the present invention can be manufactured in a simple and cost effective way, which in combination with previously discussed technical advantages is of further advantageous importance.

## Claims

1. Water discharge valve intended to be mounted extending through a wall (1), comprising a longitudinal surrounding valve housing (2) arranged with a connecting member (4) at a first end portion and an outlet member (3) adjacent to a second end portion, and having a control member (8) by said second end portion, said control member (8), when manually influenced, being arranged to accomplish via a longitudinally extending tubular shaft (7) surrounded by the valve housing (2), movement of a valve member (5) towards/from a valve seat located adjacent to the first end portion of the valve housing (2), the tubular shaft (7) communicating with an external surrounding atmosphere via at least one channel (16, 16') in connection with an outer region adjacent to the second end portion of the valve housing (2), and a valve means (V) being arranged to close the opposite end portion of the tubular shaft (7) by pressure influence from water flowing through the valve housing (2) to the outlet member (3), said valve means (V) being arranged to open communication from the internal part of the tubular shaft (7) to the valve housing (2) when said pressure influence is lost, an opening movement of the valve means (V) intended to facilitate supply of air into the valve housing (2) also simultaneously resulting in that a portion of the valve housing (2), surrounding the valve member (5), is substantially completely closed for communication with the part of the valve housing (2) surrounding the tubular shaft (7), **characterized in that** the valve means (V) is arranged as two valve bodies (11, 15) with an intermediate and preferably substantially disc shaped valve member (13), said valve bodies (11, 15) when in a first position being arranged to facilitate a through flow of water from the connecting member (4) via the valve housing (2) to the outlet member (3), and to prevent communication with the internal part of the tubular shaft (7), said valve bodies (11, 15), when moved to a second position, being arranged to open up communication between the internal part of the tubular shaft (7) and surrounding valve housing (2), and to close a portion of the valve housing (2) surrounding the valve member (5) from communication with the part of the valve housing (2) surrounding the tubular shaft (7).

2. Water discharge valve according to claim 1 , **characterized in that** the valve bodies (11, 15) comprise two substantially piston shaped members, preferably having one or more longitudinally extending channels or grooves, which facilitate by-flow only when an outer end portion is surrounded by a hole co-acting with a respective piston shaped member (11, 15).

3. Water discharge valve according claim 1 or 2, **characterized in that** the valve member (5) is spring loaded in order to accomplish a movement from an open position to a contact position against an associated valve seat when pressure loss occurs in the water supplying pipe system connected to the connecting member (4), thereby acting as a second protective means against return flow from the water discharge valve into connected water supplying pipe network.

4. Water discharge valve according to any one of claims 1 - 3, **characterized in that** the valve member (5), as well as the valve means (V), are axially slidingly movable in relation to a common supporting member, joined to or partly integrated with the end portion of the tubular shaft (7) which is directed towards the connecting member (4) of the water discharge valve.

5. Water discharge valve according to claim 4, **characterized in that** the common supporting member is arranged with channels (10, 10'; 12, 12') facilitating a water flow from the connecting member (4) to the outlet member (3) when the valve member (5) and the valve body (V) are located in a position facilitating such a flow, and further facilitating an air flow from the internal part of the tubular shaft (7) when at least the valve body (V) takes up a second position.

6. Water discharge valve according to claim 4 or 5, **characterized in that** the common supporting member comprises at least two members joined to each other.

7. Water discharge valve according to any one of claims 1 - 6, c**haracterized in** that a dividing member (9) is arranged in an intermediate position to the valve member (5) and the valve body (V), preferably serving as a co-acting valve seat for the valve body (V), and that said dividing member (9) is arranged in a substantially sealing contact against the internal surface of the valve housing (2), and arranged to be moved in relation to said internal surface in the same extent as the tubular shaft (7) is moved in relation to said valve housing (2) when manually influenced.

8. Water discharge valve according to any one of claims 1 - 7, **characterized in that** the channel/channels (16, 16') for communication between the internal part of the tubular shaft (7) and surrounding atmosphere comprises a preferably centrally located hole extending through the control member (8) of the water discharge valve to a point communicating with the internal part of the tubular shaft (7).

## Patentansprüche

1. Wasserausströmventil, das dazu bestimmt ist, sich durch eine Wand (1) erstreckend befestigt zu sein, das ein longitudinales umgebendes Ventilgehäuse (2) aufweist, das mit einem Verbindungsbauglied (4) an einem ersten Endabschnitt und einem Auslassbauglied (3) benachbart zu einem zweiten Endabschnitt angeordnet ist, und das ein Steuerbauglied (8) an dem zweiten Endabschnitt aufweist, wobei das Steuerbauglied (8), wenn dasselbe manuell beeinflusst wird, angeordnet ist, um über einen sich longitudinal erstreckenden rohrförmigen Schacht (7), der von dem Ventilgehäuse (2) umgeben ist, eine Bewegung eines Ventilbauglieds (5) zu/von einem Ventilsitz zu erzielen, der benachbart zu dem ersten Endabschnitt des Ventilgehäuses (2) angeordnet ist, wobei der rohrförmige Schacht (7) über zumindest einen Kanal (16, 16') in Verbindung mit einer Außenregion, die zu dem zweiten Endabschnitt des Ventilgehäuses (2) benachbart ist, mit einer externen Umgebungsatmosphäre kommuniziert, und wobei eine Ventileinrichtung (V) angeordnet ist, um den gegenüberliegenden Endabschnitt des rohrförmigen Schachtes (7) durch eine Druckeinwirkung von Wasser, das durch das Ventilgehäuse (2) zu dem Auslassbauglied (3) fließt, zu schließen, wobei die Ventileinrichtung (V) angeordnet ist, um eine Kommunikation von dem inneren Teil des rohrförmigen Schachtes (7) zu dem Ventilgehäuse (2) zu öffnen, wenn die Druckeinwirkung verloren geht, wobei eine Öffnungsbewegung der Ventileinrichtung (V), die eine Zufuhr von Luft in das Ventilgehäuse (2) ermöglichen soll, gleichzeitig auch dazu führt, dass ein Abschnitt des Ventilgehäuses (2), der das Ventilbauglied (5) umgibt, im Wesentlichen für eine Kommunikation mit dem Teil des Ventilgehäuses (2), der den rohrförmigen Schacht (7) umgibt, völlig geschlossen wird, **dadurch gekennzeichnet, dass** die Ventileinrichtung (V) als zwei Ventilkörper (11, 15) mit einem dazwischenliegenden und bevorzugt im Wesentlichen scheibenförmigen Ventilbauglied (13) angeordnet ist, wobei die Ventilkörper (11, 15), wenn sich dieselben in einer ersten Position befinden, angeordnet sind, um einen Durchfluss von Wasser von dem Verbindungsbauglied (4) über das Ventilgehäuse (2) zu dem Auslassbauglied (3) zu ermöglichen und eine Kommunikation mit dem inneren Teil des rohrförmigen Schachtes (7) zu verhindern, wobei die Ventilkörper (11, 15), wenn dieselben zu einer zweiten Position bewegt werden, angeordnet sind, um eine Kommunikation zwischen dem inneren Teil des rohrförmigen Schachtes (7) und dem umgebenden Ventilgehäuse (2) zu öffnen und einen Abschnitt des Ventilgehäuses (2), der das Ventilbauglied (5) umgibt, bezüglich einer Kommunikation mit dem Teil des Ventilgehäuses (2), der den rohrförmigen Schacht (7) umgibt, zu schließen.

2. Wasserausströmventil gemäß Anspruch 1, **dadurch gekennzeichnet, dass** die Ventilkörper (11, 15) zwei im Wesentlichen kolbenförmige Bauglieder aufweisen, die bevorzugt einen oder mehr sich longitudinal erstreckende Kanäle oder Rillen aufweisen, die ein Vorbeifließen nur ermöglichen, wenn ein äußerer Endabschnitt von einem Loch umgeben ist, das mit einem jeweiligen kolbenförmigen Bauglied (11, 15) zusammenwirkt.

3. Wasserausströmventil gemäß Anspruch 1 oder 2, **dadurch gekennzeichnet, dass** das Ventilbauglied (5) federbelastet ist, um eine Bewegung von einer offenen Position zu einer Kontaktposition gegen einen zugeordneten Ventilsitz zu erzielen, wenn ein Druckverlust in dem Wasserzuftihrleitungssystem, das mit dem Verbindungsbauglied (4) verbunden ist, auftritt, wodurch dasselbe als eine zweite Schutzeinrichtung gegen einen Rückfluss von dem Wasserausströmventil in das verbundene Wasserzuführleitungsnetzwerk wirksam ist.

4. Wasserausströmventil gemäß einem der Ansprüche 1 bis 3, **dadurch gekennzeichnet, dass** das Ventilbauglied (5) sowie die Ventileinrichtung (V) axial gleitend bezüglich eines gemeinsamen Trägerbauglieds bewegbar sind, das mit dem Endabschnitt des rohrförmigen Schachtes (7), der auf das Verbindungsbauglied (4) des Wasserausströmventils gerichtet ist, verbunden oder teilweise integriert ist.

5. Wasserausströmventil gemäß Anspruch 4, **dadurch gekennzeichnet, dass** das gemeinsame Trägerbauglied mit Kanälen (10, 10'; 12, 12') angeordnet ist, die einen Wasserfluss von dem Verbindungsbauglied (4) zu dem Auslassbauglied (3) ermöglichen, wenn das Ventilbauglied (5) und der Ventilkörper (V) in einer Position angeordnet sind, die einen derartigen Fluss ermöglicht, und die ferner einen Luftfluss von dem inneren Teil des rohrförmigen Schachtes (7) ermöglichen, wenn zumindest der Ventilkörper (V) eine zweite Position einnimmt.

6. Wasserausströmventil gemäß Anspruch 4 oder 5, **dadurch gekennzeichnet, dass** das gemeinsame Trägerbauglied zumindest zwei Bauglieder aufweist, die miteinander verbunden sind.

7. Wasserausströmventil gemäß einem der Ansprüche 1 bis 6, **dadurch gekennzeichnet, dass** ein Teilungsbauglied (9) in einer Zwischenposition zu dem Ventilbauglied (5) und dem Ventilkörper (V) angeordnet ist, das bevorzugt als ein mitwirkender Ventilsitz für den Ventilkörper (V) dient, und dass das Teilungsbauglied (9) in einem im Wesentlichen abdichtenden Kontakt gegen die innere Oberfläche des Ventilgehäuses (2) angeordnet ist und angeordnet ist, um bezüglich der inneren Oberfläche in dem gleichen Ausmaß bewegt zu werden, wie der rohrförmige Schacht (7) bezüglich des Ventilgehäuses (2) bewegt wird, wenn derselbe manuell beeinflusst wird.

8. Wasserausströmventil gemäß einem der Ansprüche 1 bis 7, **dadurch gekennzeichnet, dass** der Kanal/die Kanäle (16, 16') zur Kommunikation zwischen dem inneren Teil des rohrförmigen Schachtes (7) und der Umgebungsatmosphäre ein bevorzugt mittig angeordnetes Loch aufweist/aufweisen, das sich durch das Steuerbauglied (8) des Wasserausströmventils zu einem Punkt erstreckt, der mit dem inneren Teil des rohrförmigen Schachtes (7) kommuniziert.

## Revendications

1. Soupape d'évacuation d'eau prévue être montée en s'étendant à travers un mur (1), comportant un boîtier de soupape longitudinal (2) prévu avec un élément de raccordement (4) au niveau d'une première partie d'extrémité et un élément de sortie (3) de façon adjacente à une deuxième partie d'extrémité, et ayant un élément de commande (8) près de la deuxième partie d'extrémité, ledit élément de commande (8), lorsqu'il est actionné manuellement, étant prévu pour réaliser, par l'intermédiaire d'un arbre tubulaire s'étendant longitudinalement (7) entouré par le boîtier de soupape (2), le déplacement d'un élément de soupape (5) vers/à l'écart d'un siège de soupape disposé de façon adjacente à la première partie d'extrémité du boîtier de soupape (2), l'arbre tubulaire (7) communiquant avec l'atmosphère environnante externe par l'intermédiaire d'au moins un canal (16, 16') en liaison avec une zone extérieure adjacente à la deuxième partie d'extrémité du boîtier de soupape (2), et des moyens de soupape (V) étant prévus pour fermer la partie d'extrémité opposée de l'arbre tubulaire (7) sous l'influence d'une pression de l'eau qui s'écoule à travers le boîtier de soupape (2) jusqu'à l'élément de sortie (3), lesdits moyens de soupape (V) étant prévus pour ouvrir une communication depuis la partie interne de l'arbre tubulaire (7) jusqu'au boîtier de soupape (2) lorsque ladite influence de pression est perdue, un mouvement d'ouverture des moyens de soupape (V) prévus pour faciliter l'alimentation en air dans le boîtier de soupape (2) ayant également pour résultat qu'une partie du boîtier de soupape (2), qui entoure l'élément de soupape (5), est pratiquement totalement fermée pour une communication avec la partie du boîtier de soupape (2) entourant l'arbre tubulaire (7), **caractérisée en ce que** les moyens de soupape (V) sont prévus sous la forme de deux corps de soupape (11, 15) avec un élément de soupape intermédiaire et de préférence sensiblement en forme de disque (13), lesdits corps de soupape (11, 15), lorsqu'ils sont dans une première position, étant prévus pour faciliter un écoulement d'eau depuis l'élément de raccordement (4) jusqu'à l'élément de sortie (3) en passant par le boîtier de soupape (2), et pour empêcher une communication avec la partie interne de l'arbre tubulaire (7), lesdits corps de soupape (11, 15), lorsqu'ils sont déplacés vers une deuxième position, étant prévus pour ouvrir une communication entre la partie interne de l'arbre tubulaire (7) et le boîtier de soupape environnant (2), et pour fermer une partie du boîtier de soupape (2) qui entoure l'élément de soupape (5) en communication avec la partie du boîtier de soupape (2) qui entoure l'arbre tubulaire (7).

2. Soupape d'évacuation selon la revendication 1, **caractérisée en ce que** les corps de soupape (11, 15) comportent deux éléments sensiblement en forme de piston, ayant de préférence un ou plusieurs canaux ou rainures s'étendant longitudinalement, qui facilitent l'écoulement seulement lorsqu'une partie d'extrémité externe est entourée par un trou qui coopère avec un élément en forme de piston (11, 15) respectif.

3. Soupape d'évacuation selon la revendication 1 ou 2, **caractérisée en ce que** l'élément de soupape (5) est chargé par ressort afin de réaliser un mouvement depuis une position ouverte jusqu'à une position de contact contre un siège de soupape associé lorsqu'une perte de pression apparaît dans le système de tuyau d'alimentation en eau relié à l'élément de raccordement (4), en agissant ainsi comme des seconds moyens de protection contre un écoulement en retour depuis la soupape d'évacuation d'eau dans un réseau de tuyau d'alimentation en eau raccordé.

4. Soupape d'évacuation selon l'une quelconque des revendications 1 à 3, **caractérisée en ce que** l'élément de soupape (5), ainsi que les moyens de soupape (V) sont mobiles de façon axialement coulissante par rapport à un élément de support commun, relié ou partiellement intégré à la partie d'extrémité de l'arbre tubulaire (7) qui est orienté vers l'élément de raccordement (4) de la soupape d'évacuation d'eau.

5. Soupape d'évacuation selon la revendication 4, **caractérisée en ce que** l'élément de support commun est pourvu de canaux (10, 10'; 12, 12') qui facilitent un écoulement d'eau depuis l'élément de raccordement (4) vers l'élément de sortie (3) lorsque l'élément de soupape (5) et le corps de soupape (V) sont disposés dans une position qui facilite un tel écoulement, et qui facilitent en outre un écoulement d'air depuis la partie interne de l'arbre tubulaire (7) lorsque au moins le corps de soupape (V) prend une deuxième position.

6. Soupape d'évacuation selon la revendication 4 ou 5, **caractérisée en ce que** l'élément de support commun comprend au moins deux éléments reliés l'un à l'autre.

7. Soupape d'évacuation selon l'une quelconque des revendications 1 à 6, **caractérisée en ce qu'**un élément de séparation (9) est disposé dans une position intermédiaire sur l'élément de soupape (5) et le corps de soupape (V), en servant de préférence de siège de soupape qui coopère pour le corps de soupape (V), et **en ce que** ledit élément de séparation (9) est disposé en contact sensiblement étanche contre la surface interne du boîtier de soupape (2), et est prévu pour être déplacé par rapport à ladite surface interne de la même valeur que l'arbre tubulaire (7) est déplacé par rapport au dit boîtier dé soupape (2) lorsqu'il est influencé manuellement.

8. Soupape d'évacuation selon l'une quelconque des revendications 1 à 7, **caractérisée en ce que** le canal/les canaux (16, 16') pour communication entre la partie interne de l'arbre tubulaire (7) et l'atmosphère environnante comprennent un trou disposé de préférence de manière centrale s'étendant à travers l'élément de commande (8) de la soupape d'évacuation d'eau jusqu'à un point communiquant avec la partie interne de l'arbre tubulaire (7).
